# EUROPEAN PATENT SPECIFICATION

(11) **EP 1 420 588 B1**
(45) Date of publication and mention of the grant of the patent: **06.08.2008**
(21) Application number: 03026181.2
(22) Date of filing: 17.11.2003
(51) Int. Cl.: H04N 7/14

(54) **Communication terminal with TV telephone function**
Kommunikationsendgerät mit Bildtelefonfunktion
Terminal de télécommunications à fonction visiophone

(30) Priority: 18.11.2002 JP 2002334140
(43) Date of publication of application: 19.05.2004
(73) Proprietor: NEC CORPORATION, Tokyo (JP)
(72) Inventor: Masuno, Hiroshi, Tokyo (JP)
(74) Representative: Vossius & Partner

(56) References cited:
- EP-A- 1 170 948
- US-A- 5 949 484
- US-A1- 2002 075 249

## Description

The present invention relates to an information communication terminal, and more particularly to a mobile type of information communication terminal with a TV telephone function.

The recent progress of performance and function is remarkable in a mobile information communication terminal such as a portable phone and PHS, and the information communication terminal generally has additional functions such as an E-mail function and an Internet browser function in addition to basic functions such as a conversation communication function. Moreover, in the recent years, the information communication terminal with a so-called TV telephone function is being provided to transmit and receive image data together with communication sound, as known in JP-A-10-065780 and JP-P2002-094629A.

By the way, the TV telephone function for a fixed telephone is provided heretofore. In case of the fixed telephone, the power consumption is not considered because it is not of a cell drive type (a battery type), unlike the portable phone, PHS and so on. Also, consideration is not accomplished to additional functions such as an E-mail function, and an Internet browser function, which are general to the information communication terminal. Therefore, when the conventional TV telephone function for the fixed telephone is applied to the information communication terminal just as it is, various problems are caused.

First, a conventional mobile phone has basic functions such as a conversation communication function, an E-mail function, and an Internet browser function. The basic functions handles still image data generally. Therefore, in conventional mobile phone, when a screen should be not changed, the display control circuit does not output display data to a display unit for suppressing power consumption. On the other hand, in a TV telephone, motion image data is always supplied and a CODEC circuit of the display control circuit operates such that the motion image data is always outputted to the display unit. Therefore, it is difficult to use a display control circuit in common to the conventional mobile phone and the TV telephone.

If the display control circuit is fabricated for the TV telephone in order to eliminate the problem, a new problem is caused that power is consumed by the TV telephone function even when the TV telephone is not used. That is, if the display control circuit for the TV telephone is used for the still image data display, it is difficult to stop power supply to the TV telephone functional even when the TV telephone function is not used, e.g., even in case of a conversation communication and E-mail. As the result, wasteful power is consumed by a display control circuit.

Moreover, if both of a mobile phone with no TV telephone function and a mobile phone with the TV telephone function are independently developed in order to avoid the above common use problem, the double development causes the increase of cost and the wastefulness of resources because the structures of the display control circuits are different so that the commonness of the display control circuits is lost between the these mobile phones.

In conjunction with the above description, a TV telephone apparatus is disclosed in

JP-A-3-53785. The TV telephone apparatus of this conventional example is composed of a main body connected with a telephone line and having a first radio transmission and reception section, and a carrying section. The carrying section is composed of a second radio transmission and reception section, a camera, a display section, a microphone, an operation section for operations such as dialing, and a memory for storing image data.

Also, a composite communication terminal is disclosed in

JP-A-8-149178. In the composite communication terminal of this conventional example, a communication control block which carries out a communication control, a speech processing block which processes sound information, and an image processing block which carries out image processing to the picture information are connected with a main control block through a predetermined bus to carry out desired composite data processing. The composite communication terminal is further composed of a power supply which supplies power to each functional block, a monitor section for monitoring the operation of the functional block, and a power supply control section for controlling a power supply level from the power supply to the functional block based on the operation of the functional block from the monitor section.

Also, a TV telephone apparatus is disclosed in JP-A-9-322137.

This TV telephone apparatus of the conventional example is composed of a communication circuit which can transmit and receive a compressed-coded signal through a communication line such as a general public line or an ISDN line. A compression coding circuit deciphers and expands the compressed-coded signal received by the communication circuit and sent from a counter node into an image signal and an audio signal. A camera picks up an object to generate an image signal. An audio signal processing circuit processes an audio signal from a microphone and the audio signal outputted from the compression coding section and outputs as a speaker drive signal. A video signal processing circuit converts the image signal outputted from the camera into a video signal and outputs the image signal outputted from the said compression coding circuit as a video signal. A video display unit displays the video signal outputted from the video signal processing circuit. A switch is provided to stop power supply supplied to the camera and the video signal processing circuit. When the camera of the TV telephone is not used, the power supply supplied to the camera and the video signal processing circuit is stopped using the switch.

Also, a portable phone with a TV telephone function is disclosed in

JP-A-10-65780. The portable phone of this conventional example has a radio transmission and reception function of an image signal and an audio signal, and contains a vide camera section, an image display section which displays the image signal received or taken by the camera section, and a touch operation section which displays various screens and is possible to touch-input data. A first housing section provided with the image display section and a second housing section provided with the touch operation section are combined with each other at ends by a rotation axis. Also, the video camera section is rotatably provided for the rotation axis. The first and second housing sections have notch sections to permit the rotation of the camera section. When the first and second housing sections are folded, the image display section and the touch operation section are not exposed and the camera section is accommodated in the notch sections.

Also, an information communication terminal is disclosed in JP-P2002-94629A . In the information communication terminal of this conventional example, an upper case and a lower case are rotatably combined by a coupling section. The coupling section contains a rotation axis supporting section of the lower case, another rotation axis supporting section of the upper case, and an accommodating section rotatably provided the rotation axis supporting section. A video camera and lens are accommodated in the accommodating section. A display and operation section is provided for the upper case and another display and operation section is provided for the lower case. A camera image, a reception image, various images and touch operation buttons are displayed on the display and operation sections.

US 5,949,484 relates to a portable terminal in which information to be transmitted (e.g. input from a camera) is encoded at an image encoding section with an encoding mode selected from a plurality of encoding modes depending upon the remaining amount of a battery. No reference is made as to providing a display data generation section other than a TV telephone processing section so that a display unit is selectively connected to the display data generation section and the TV telephone processing section.

Therefore, an object of the present invention is to provide an information communication terminal with a TV telephone function, in which image data generated in the information communication terminal and image data received from a counter end can be displayed in a small circuit scale.

Another object of the present invention is to provide an information communication terminal with a TV telephone function, in which it is possible to avoid wastefully power consumption.

Another object of the present invention is to provide an information communication terminal with a TV telephone function, in which image data generated in the information communication terminal and image data received from a counter end can be stored for replay in future.

In an aspect of the present invention, an information communication terminal with a TV telephone function, includes a display data generating section, a TV telephone processing section, a display unit, a first switch and a control section. The display data generating section generates first display data in a general use mode in which a TV telephone function is not used. The TV telephone processing section generates second display data in a TV telephone use mode in which the TV telephone function is used. The display unit displays inputted display data. The first switch is provided among the display data generating section, the TV telephone processing section and the display unit. The control section controls the first switch to connect the display data generating section and the display unit in the general use mode such that the first display data is supplied to the display unit and to connect the TV telephone processing section and the display unit in the TV telephone use mode such that the second display data is supplied to the display unit.

Here, the information communication terminal may further include a power source and a second switch provided between the TV telephone processing section and the power source. The control section controls the second switch to disconnect the power source from the TV telephone processing section in the general use mode and to connect the power source from the TV telephone processing section in the TV telephone use mode.

Also, the TV telephone processing section may include a first memory and a first input circuit connected to the display data generating section. The first input circuit receives the first display data from the display data generating section, carries out a first converting process to the first display data to generate converted display data, and to store in the first memory. The TV telephone processing section may further include a motion picture CODEC circuit which receives compressed motion picture data from a counter end, expands the received compressed motion picture data into expanded motion picture display data, and stores in the first memory, a camera, a second input circuit and a combining circuit. The second input circuit is connected to the camera. The second input circuit receives motion picture display data from the camera, carries out a second converting process to the motion picture display data to generate converted motion picture display data, and to store in the first memory. The combining circuit reads out the converted display data, the expanded motion picture display data and the converted motion picture display data from the first memory to combine or synthesize into the second display data, and outputs the second display data to the first switch. In this case, the motion picture CODEC circuit may read out the converted motion picture display data from the first memory, and compresses the converted motion picture display data into transmission motion picture data. The information communication terminal may further include a communication circuit which transmits the transmission motion picture data to the counter end.

Also, the display unit has a third input circuit which receives the first display data as the inputted display data, and the first input circuit achieves a same function as that of the third input circuit.

Also, the TV telephone processing section may further include a second memory. A motion picture CODEC circuit stores the expanded motion picture display data in the second memory in response to a first instruction from the control section, and the second input circuit stores the converted motion picture display data in the second memory in response to a first instruction from the control section.

In another aspect of the present invention, a switching method between a mobile phone function and a TV telephone function, is achieved by (a) generating first display data in a mobile phone function mode; by (b) generating second display data by using a TV telephone function in a TV telephone function mode; by (c) connecting the first display data to a display unit in the general use mode such that the first display data is displayed on the display unit; and by (d) connecting the second display data to the display unit in the TV telephone function mode such that the second display data is displayed on the display unit.

Here, the switching method may further include (e) supplying electric power for the TV telephone function in the TV telephone function mode; and (f) stopping the supply of the electric power in the mobile phone function mode.

Also, the (b) generating may be achieved by carrying out a first converting process to the first display data to generate converted display data, and to store in a first memory; by expanding compressed motion picture data received from a counter end into expanded motion picture display data, and storing in the first memory; by carrying out a second converting process to motion picture display data taken by a camera to generate converted motion picture display data, and to store in the first memory; and by reading out the converted display data, the expanded motion picture display data and the converted motion picture display data from the first memory to combine or synthesize into the second display data. In this case, the switching method may further include reading out the converted motion picture display data from the first memory, and compressing the converted motion picture display data into transmission motion picture data; and transmitting the transmission motion picture data to the counter end.

Also, the expanding may include storing the expanded motion picture display data in a second memory, and the carrying out a second converting process may include storing the converted motion picture display data in the second memory.

Hereinafter, an information communication terminal with a TV telephone function of the present invention will be described with reference to the attached drawings.
Fig. 1 is a block diagram showing the structure of an information communication terminal with a TV telephone function according to a first embodiment of the present invention;
Fig. 2 is a block diagram showing the detail of an image data processing circuit shown in Fig. 1;
Fig. 3 is a diagram showing a memory map of a display memory shown in Fig. 1;
Fig. 4 is a block diagram showing the structure of the information communication terminal with the TV telephone function according to a second embodiment of the present invention; and
Fig. 5 is a block diagram showing the detail of an image data processing circuit shown in Fig. 4.

### First Embodiment

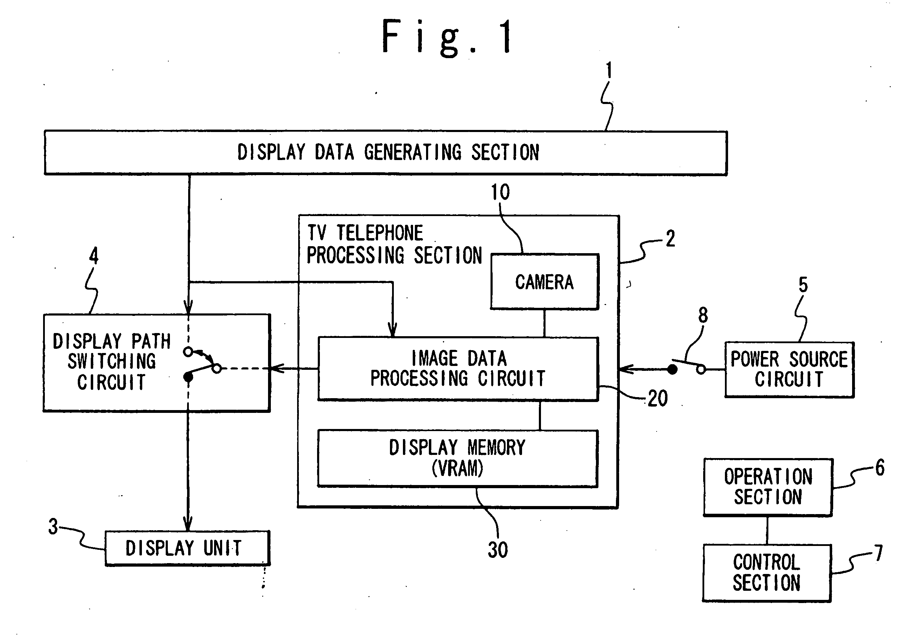

First, the information communication terminal with the TV telephone function according to the first embodiment of the present invention will be described. The information communication terminal with the TV telephone function according to the first embodiment is an information communication terminal such as a portable phone and a mobile type of PHS, for example. Referring to Fig. 1, the information communication terminal is composed of a display data generating section 1, and a TV telephone processing section 2, a display unit 3, a display path switching circuit 4, a battery 5 as a power source circuit, an operation section 6, a control section 7 and a power supply control switch 8.

The display data generating section 1 generates user interface display data used in a general mobile terminal having a conversation communication function, an E-mail function, and an Internet browser function in a general use mode, an imaging use mode and a TV telephone use mode in response to an instruction from the control section 7. The user interface display data is supplied to the display unit 3. The user interface display data shows general data and contents necessary to use the information communication terminal as a portable phone and PHS. For example, the user interface display data contains operation menus, telephone numbers, e-mail data, browser display data, battery level data, radio wave strength data and so on. These data are only one example of data generated by the display data generating section 1, and the display data generating section 1 can generate image data other than the above display data.

The TV telephone processing section 2 generates motion picture display data for the TV telephone and a synthetic or combined display data of the user interface display data the motion picture display data in the TV telephone use mode and in the imaging use mode in response to an instruction from the control section 7. The TV telephone processing section 2 is composed of a camera 10, an image data processing circuit 20, and a display memory (VRAM) 30.

The camera 10 images an object to generate display data such as still image data and motion picture image data in the TV telephone use mode and outputs the display data to the image data processing circuit 20. The camera 10 is always activated in the imaging use mode and selectively activated in the TV telephone use mode in response to an instruction from the control section 7.

The image data processing circuit 20 processes the display data supplied from the display data generating section 1 and the display data taken by the camera 10 to generate final display data in the TV telephone use mode and the imaging use mode in response to an instruction from the control section 7. The final display data is outputted to the display unit 3. Specifically, the image data processing circuit 20 has a function to store display data supplied from the image data generating section 1 in the display memory (VRAM) 30, and a function to store the display data supplied from the camera 10 in display memory 30. Also, the image data processing circuit 20 has a function to compress the display data supplied from the camera 10 into compressed motion picture data and to transmit it to a counter terminal through a communication circuit 50 to be described later. In addition, the image data processing circuit 20 has a function to expand the compressed motion picture data transmitted from the counter terminal into motion picture display data and to store in the display memory 30, to a function to select some of the image data stored in the display memory 30 and to combine or synthesize into the display data and to output to the display unit 3. Thus, the display data for the TV telephone can be displayed on the display unit 3.

The display path switching circuit 4 is provided between the display data generating section 1, the TV telephone processing section 2 and the display unit 3. The display path switching circuit 4 carries out a switching operation in response to an instruction from the control section 7 such that one of the display data from the display data generating section 1 and the display data from the TV telephone processing section 2 is supplied to the display unit 3.

The operation section 6 contains various keys used to input data. The operation section 6 may have a touch screen input function. The user can input data and commands by using the operation section 6.

The power supply control switch 8 turns on or off to control the power supply from the power source circuit 5 to the TV telephone processing section 2 in response to an instruction from the control section 7.

The control section 7 controls the whole sections of information communication terminal, and especially issues the instructions to each of the sections based on the data and the commands inputted from the operation section 6 by the user.

The display unit 3 has an interface (not shown) for the display data directly supplied from the display data generating section 1. The interface is not used in response to an instruction from the control section 7 when the final display data is supplied from the TV telephone processing section 2

In this way, the information communication terminal can operates in the TV telephone use mode, the imaging use mode and the general use mode.

It should be noted that the information communication terminal in this embodiment has the same structure as the existing mobile terminal such as a portable phone and PHS, although being not shown. For example, the information communication terminal has the structure necessary for a conversation communication function, an E-mail function and an Internet browser function, such as an antenna, a radio transmission and reception section, a speaker and a microphone.

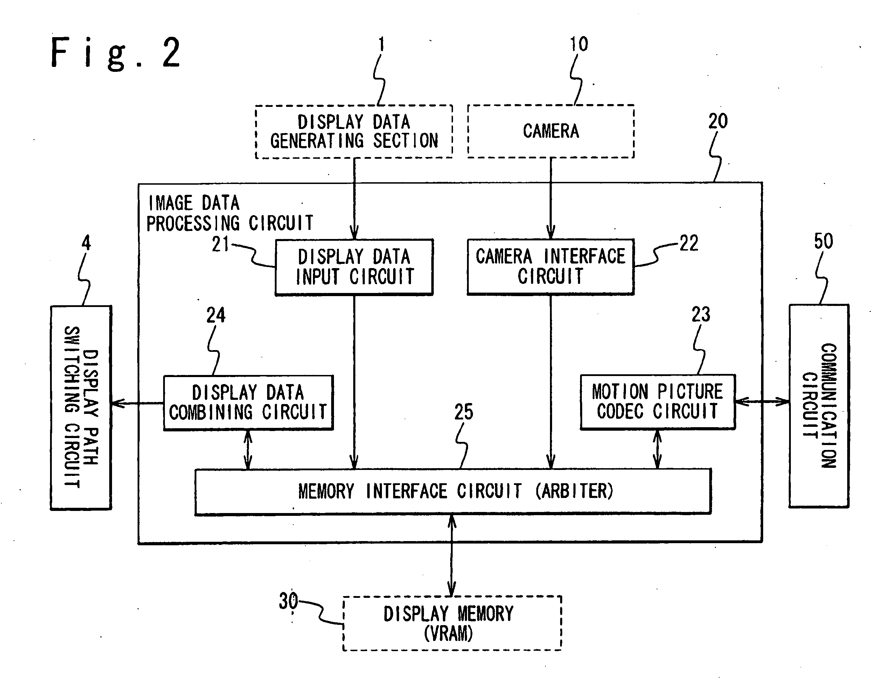

Fig. 2 shows the detailed structure of the image data processing circuit 20. As shown in Fig. 2, the image data processing circuit 20 is composed of a display data input circuit 21, a camera interface circuit 22, a motion picture CODEC circuit 23, a display data combining circuit 24, and a memory interface circuit (arbiter) 25.

The display data input circuit 21 receives the display data from the display data generating section 1 and stores it in the display memory 30 via the memory interface circuit (arbiter) 25 in the TV telephone use mode and the imaging use mode in response to an instruction from the control section 7. The display data input circuit 21 has a same function as an input interface of the display unit 3. Therefore, the display data generating section 1 does not have to distinguish the output to the display data processing circuit 4 and the output to the display unit 3.

The camera interface circuit 22 receives the display data from the camera 10 and stores in the display memory 30 via the memory interface circuit (arbiter) 25 in the TV telephone use mode and the imaging use mode in response to an instruction from the control section 7.

The motion picture CODEC circuit 23 carries out a compressing process of the motion picture data to be transmitted and an expanding process of the received compressed data in the TV telephone use mode in response to an instruction from the control section 7. The data compressed or expanded by the motion picture CODEC circuit 23 is sent and received to and from a TV telephone on the counter side (not shown) through the communication circuit 50.

The display data combining circuit 24 reads out the display data from the display memory 30 through the memory interface circuit 25, and combines or synthesizes them into the final display data and outputs to the final display data to the display unit 3, in the TV telephone use mode and the imaging use mode in response to an instruction from the control section 7. The display data to be combined or synthesized are the display data from the display data generating section 1, the display data from the camera 10, the motion picture display data from the motion picture CODEC circuit 23. By combining or synthesizing the display data by the display data combining circuit 24, it is possible to display a battery remaining power quantity, a radio wave strength and so on in case of all the use mode.

The memory interface circuit (arbiter) 25 carries out arbitration of a data write request from the display data input circuit 21 and the camera interface circuit 22, a read and write request from the motion picture CODEC circuit 23, and a read request from the display data combining circuit 24 and accesses the display memory 6 under the control of the control section 7. As an arbitration method in the memory interface circuit 25, there are a method of using a high-speed memory and time-divisionally accessing and a method of having a buffer memory and saving a request in case of collision between the requests.

The display memory (VRAM) 30 stores the data to be displayed on the display unit 3. In this embodiment, an exclusive-use VRAM (Video Random Access memory) is used as the display memory 30 to realize the high-speed processing of display data.

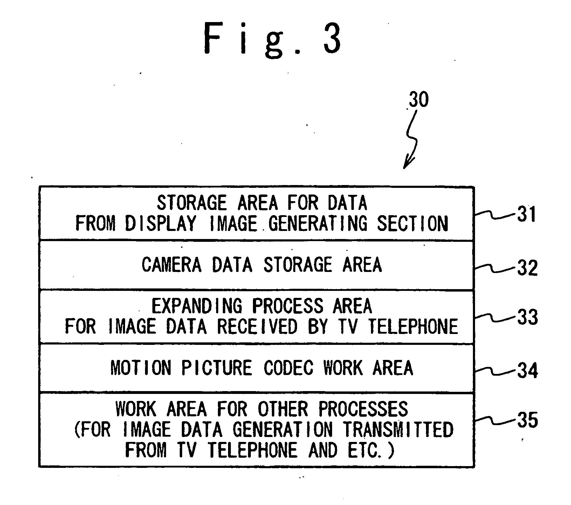

A memory map of the display memory 30 in this embodiment is shown in Fig. 3. As shown in Fig. 3, the display memory 30 has an area 31 used to store the display data from the image data generating section 1, an area 32 used to store the display data from the camera 10, an area 33 used to carry out an expanding process to the compressed motion picture data received by the communication circuit 50, an area 34 used for a motion picture CODEC process, and besides, a work area 35 for the compressed motion picture data to be transmitted in the TV telephone use mode.

It should be noted that in this embodiment, the information communication terminal has the exclusive-use VRAM as the display memory 30, and the memory map structure as shown in Fig. 3. However, this is not only one example for the display memory. The display memory is limited to one described in this embodiment. For example, a part of another memory can be allocated to the display memory 30.

The display unit 3 stores the final display data sent via the display path switching circuit 4 in an internal memory (not shown) and displays the final display data. This operation is similar to that of a display unit provided for mobile phone and PHS. Specifically, the display unit 3 can be an LCD with a built-in RAM, which is the same as that of the existing portable phone and so on. In this way, the display unit 3 can display the final display data using the internal memory when the display data is not inputted.

The display unit 3 has the interface with the same function as the display data input circuit 21 of the image data processing circuit 20 in the TV telephone processing section 2 in the point that the display unit inputs the display data from the display data generating section 1. Therefore, the input interface of the display unit 3 is used in the general use mode and is not used in the TV telephone use mode and the imaging use mode in response to an instruction from the control section 7.

The display path switching circuit 4 carries out a switching operation to output the display data supplied from the display data generating section 1 as the final display data to the display unit 3 in the general use mode in response to an instruction from the control section 7 and the final display data from supplied the image data processing circuit 20 of the TV telephone processing section 2 to the display unit 3 in the TV telephone use mode and the imaging use mode in response to an instruction from the control section 7.

The battery 5 as the power source circuit supplies the power to the display data generating section 1 and the TV telephone processing section 2 as shown in Fig. 1.

The power supply control switch 8 is operated to stop the power supply from the battery 5 to the TV telephone processing section 2, when the display data supplied from the display data generating section 1 is outputted to the display unit 3, i.e., in the general use mode. The power supply control switch 8 is conjunction or related with the switching operation of the display path switching circuit 4. In the general use mode in which the TV telephone is not used, the switch 8 is turned off to stop the power supply to the TV telephone processing section 2 in response to the instruction from the control section 8.

It should be noted that the operation mode selection of the communication terminal is carried out by operating the operation section 6 by the user, for example, operating a menu screen displayed on the display unit 3, like a case of the existing portable phone.

Next, an operation of the information communication terminal with the TV telephone function will be described with reference to Fig. 1.

First, the user selects the general use mode by operating the operation section 6. In the general use mode in which the TV telephone is not used, the control section 7 issues the instruction to the switch circuit 4 such that the display path switching circuit 4 takes the state to connect the display data generating section 1 and the display unit 3. When predetermined display data is generated by the display data generating section 1 in this state, the display data is sent to the display unit 3 through the display path switching circuit 4. The display unit 3 receives the display data through the input interface (not shown) and displays on the display unit 3 visibly.

This state is the same as the usual portable phone that does not have the TV telephone function, and it is not necessary to supply the power to the TV telephone processing section 2. Therefore, in the general use mode, the control section 7 issues the instruction to the power supply control in the general use mode, such that the power supply control switch 8 is operated to stop the power supply from the battery 5 to the TV telephone processing section 2. Thus, the power consumption of the battery can be suppressed.

Next, the user selects the TV telephone use mode by operating the operation section 6. In the TV telephone use mode in which the TV telephone is used, the control section 7 issues the instruction to the switch circuit 4 such that the display path switching circuit 4 is switched to the state to connect the image data processing circuit 20 and the display unit 3. As a result, the display data from the display data generating section 1 is supplied to the image data processing circuit 20, and stored in the memory 30. The display data taken by the camera 10 may be also supplied to the image data processing circuit 20, and stored in the memory 30. In addition, the compressed motion picture data received by the communication circuit 50 is expanded and then stored in the memory 30. Some of the stored data are read out from the memory 30 and combined or synthesized into the final display data. The final display data is outputted to the display path switching circuit 4, and inputted by the display unit 3. In this case, a process of the input interface (not shown) of the display unit 3 may be omitted. Thus, the final display data is displayed on the display unit 3 visibly.

In this state, the information communication terminal is used as the TV telephone. Therefore, the control section 7 issues the instruction to the power supply control switch 8 such that the power is supplied from the battery 5 to the TV telephone processing section 2. The operation in the imaging use mode is similar to that of the TV telephone use mode except for the operation of the motion picture CODEC circuit 23.

As described above, according to the information communication terminal with the TV telephone in this embodiment, the display data in the general use mode and the display data in the TV telephone mode and the imaging use mode can be supplied to the display unit 3 by switching the display path switching circuit 4. In this way, it is possible to turn off the power supply to the TV telephone processing section 2 when the TV telephone function is not used. Therefore, the power consumption when the TV telephone function is not used can be made approximately equal to the power consumption of a mobile phone which does not have the TV telephone function, and it is possible to effectively use the power of the battery.

Also, according to this embodiment, it is possible to add the TV telephone function only by providing the display path switching circuit 4. In case of a terminal with no TV telephone function, the display path switching circuit 4 can be omitted to directly connect the display data generating section 1 and the display unit 3. Therefore, when a terminal with the TV telephone function and a terminal with no TV telephone function are developed and manufactured for a line-up of the mobile terminals, the circuits and the parts can be used between them in common. Thus, it is possible to reduce the cost and to effectively use resources. Especially, in the mobile terminal of this embodiment, the input interface of the image data processing circuit 20 in the TV telephone processing section 2 receiving the display data from the display data generating section 1 is equivalent to the input interface of the display unit 3 which inputs data from the display data generating section 1 just as it is. Therefore, when the TV telephone function is added to the mobile terminal, the interface change to be made is minimum. Thus, it is possible to reduce the cost and to effectively use resources.

### Second Embodiment

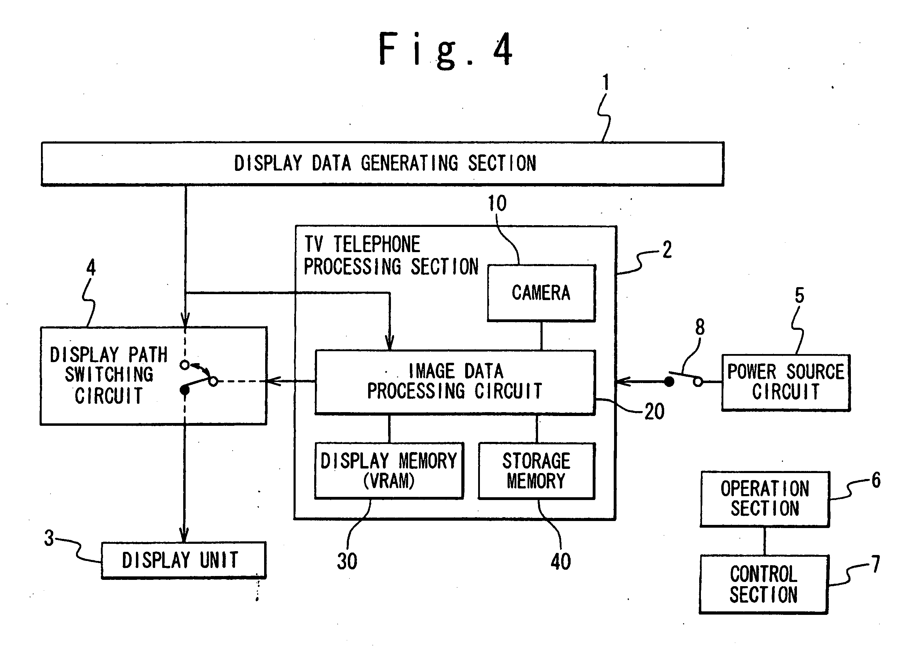

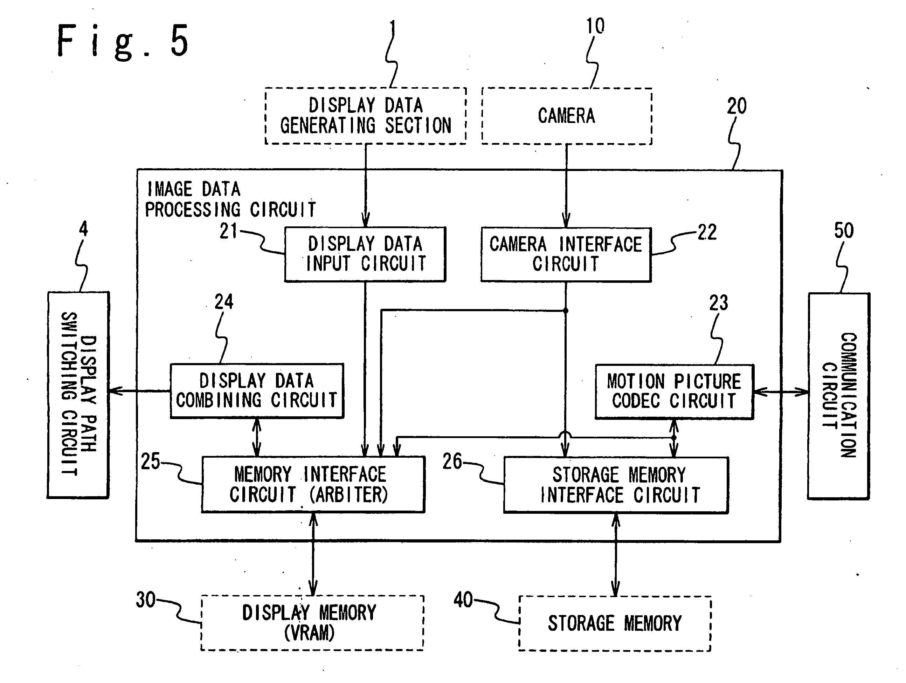

Next, the information communication terminal with the TV telephone function according to the second embodiment of the present invention will be described with reference to Figs. 4 and 5.

Fig. 4 is a block diagram showing the structure of the information communication terminal with the TV telephone function according to the second embodiment of the present invention. Fig. 5 is a block diagram showing the detail of the image data processing circuit shown in Fig. 4. The information communication terminal of this embodiment shown in these figures is a modification of the above-mentioned first embodiment and is a storage memory 40 is added to the TV telephone processing section 20. The structures of other components are same as those of the first embodiment except for the above. Therefore, the same components are allocated with the same reference numerals as those in the first embodiment and the detailed description is omitted.

As shown in Figs. 4 and 5, in this embodiment, the storage memory 40 connected with the image data processing circuit 20 is provided for the TV telephone processing section 2. The storage memory 40 is used to store the output of the image data processing circuit 20. Specifically, the storage memory 40 is used to record and store the reception picture of the TV telephone and the data of the camera 10 and a flash memory and so on may be used for it, for example.

Also, in this embodiment, a storage memory interface circuit 26 is added in addition to the storage memory 40, as shown in Fig. 5. The storage memory interface circuit 26 is an interface for writing and read data into and from the storage memory 40.

It should be noted that the storage memory may any structure if it can store the image data taken by the camera 10 and a reception image from a counter terminal. Also, the storage memory may have a file system function, a compressing function of a still image from the camera, an expanding function of the compressed image, and so on.

According to the information communication terminal of this embodiment in which the storage memory 40 is provided, it is possible to carry out the communication function and the TV telephone function, like the communication terminal according to the above-mentioned embodiment. Also, the picture taken by the camera 10 can be freely stored, and a picture received by the TV telephone can be recorded. Moreover, the camera 10 can be used as a video camera and a digital camera when communication is not carried out. In addition, the stored picture (the motion picture or the still image) can be replayed. Thus, it is possible to provide the excellent information communication terminal which can be used for the more extensive application fields.

As described above, the information communication terminal with the TV telephone function of the present invention are described, by showing the preferred embodiments. However, the information communication terminal with the TV telephone function according to the present invention is not limited only to the above-mentioned embodiments and it is possible to add various changes in the scope of the present invention. For example, the above-mentioned embodiments are described by taking the portable phone and PHS as an example of the communication terminal which the present invention is applied to. However, the present invention can be applied to any type of the information communication terminal if it has the TV telephone function and does not receive any restriction based on a communication system and a terminal structure and so on. Therefore, the present invention can be applied to any type of the communication terminals such as a PDA, a mobile-type PC, and the next generation mobile terminal in addition to the portable phone and PHS.

As described above, according to the information communication terminal with the TV telephone function and the switching method to the TV telephone display of the present invention, by providing the switching means of switching a screen output at the time of the TV telephone and a general screen output at the time of the communication to the portable phone with the TV telephone function and so on, it is possible to achieve the general function and the TV telephone function in the portable phone and so on without consuming the wasteful power, without the increase of the cost and the wastefulness of resources and so on.

## Claims

1. An information communication terminal with a TV telephone function, comprising:
a display data generating section (1) for generating first display data in a general use mode in which a TV telephone function is not used;
a TV telephone processing section (2) for generating second display data in a TV telephone use mode in which the TV telephone function is used;
a display unit (3) for displaying inputted display data;
a first switch (4) provided among said display data generating section, said TV telephone processing section and said display unit;
a control section (7) for controling said first switch to connect said display data generating section and said display unit in said general use mode such that said first display data is supplied to said display unit and to connect said TV telephone processing section and said display unit in said TV telephone use mode such that said second display data is supplied to said display unit;
a first memory (30);
a first input circuit (21) connected to said display data generating section, wherein said first input circuit is adapted to receive said first display data from said display data generating section, carry out a first converting process to said first display data to generate converted display data, and to store in said first memory;
a motion picture CODEC circuit (23) for receiving compressed motion picture data from a counter end, expanding said received compressed motion picture data into expanded motion picture display data, and storing in said first memory; and
a combining circuit (24) for reading out said converted display data and said expanded motion picture display data from said first memory to combine or synthesize into said second display data, and outputting said second display data to said first switch.

2. The information communication terminal with the TV telephone function according to claim 1, further comprising:
a power source (5); and
a second switch (8) provided between said TV telephone processing section and said power source,
wherein said control section is adapted to control said second switch to disconnect said power source from said TV telephone processing section in said general use mode and to connect said power source to said TV telephone processing section in said TV telephone use mode.

3. The information communication terminal with the TV telephone function according to claim 1 or 2.
wherein said TV telephone processing section comprises:
a camera (10); and
a second input circuit (22) connected to said camera, wherein said second input circuit is adapted to receive motion picture display data from said camera, carry out a second converting process to said motion picture display data to generate converted motion picture display data, and to store in said first memory
wherein the combining circuit is adapted to read out said converted motion picture display data from said first memory.

4. The information communication terminal with the TV telephone function according to any of claims 1 to 3, wherein said motion picture CODEC circuit is adapted to read out said converted motion picture display data from said first memory, and compress said converted motion picture display data into transmission motion picture data, and
said information communication terminal further comprises:
a communication circuit (50) for transmitting said transmission motion picture data to said counter end.

5. The information communication terminal with the TV telephone function according to any of claims 1 to 4, wherein said display unit has a third input circuit which receives said first display data as said inputted display data,
said first input circuit achieves a same function as that of said third input circuit.

6. The information communication terminal with the TV telephone function according to any of claims 1 to 5, wherein said TV telephone processing section further comprises:
a second memory (40),
wherein said motion picture CODEC circuit is adapted to store said expanded motion picture display data in said second memory in response to an instruction from said control section, and
said second input circuit is adapted to store said converted motion picture display data in said second memory in response to an instruction from said control section.

7. A switching method between a mobile phone function and a TV telephone function, comprising:
(a) generating first display data in a mobile phone function mode;
(b) generating second display data by using a TV telephone function in a TV telephone function mode;
(c) connecting said first display data to a display unit in said mobile phone function mode such that said first display data is displayed on said display unit; and
(d) connecting said second display data to said display unit in said TV telephone function mode such that said second display data is displayed on said display unit,
wherein said step (b) comprises:
carrying out a first converting process to said first display data to generate converted display data, and to store in a first memory;
expanding compressed motion picture data received from a counter end into expanded motion picture display data, and storing in said first memory; and
reading out said converted display data and said expanded motion picture display data from said first memory to combine or synthesize into said second display data.

8. The switching method according to claim 7, further comprising:
(e) supplying electric power for said TV telephone function in said TV telephone function mode; and
(f) stopping the supply of the electric power in said mobile phone function mode.

9. The switching method according to claim 7 or 8,
wherein said step (b) comprises:
carrying out a second converting process to motion picture display data taken by a camera to generate converted motion picture display data, and to store in said first memory;
wherein said converted motion picture display data is read out from said first memory to combine or synthesize into said second display data.

10. The switching method according to any of claims 7 to 9, further comprising:
reading out said converted motion picture display data from said first memory, and compressing said converted motion picture display data into transmission motion picture data; and
transmitting said transmission motion picture data to said counter end.

11. The switching method according to any of claims 7 to 10, wherein said expanding comprises:
storing said expanded motion picture display data in a second memory, and
said carrying out a second converting process comprises:
storing said converted motion picture display data in said second memory.

## Patentansprüche

1. Informations-Kommunikationsendgerät mit einer Bildtelefonfunktion, welches aufweist:
einen Anzeigedaten-Erzeugungsabschnitt (1) zum Erzeugen erster Anzeigedaten in einem allgemeinen Verwendungsmodus, in dem eine Bildtelefonfunktion nicht verwendet wird,
einen Bildtelefon-Verarbeitungsabschnitt (2) zum Erzeugen zweiter Anzeigedaten in einem Bildtelefon-Verwendungsmodus, in dem die Bildtelefonfunktion verwendet wird,
eine Anzeigeeinheit (3) zum Anzeigen eingegebener Anzeigedaten,
einen ersten Schalter (4), der zusammen mit dem Anzeigedaten-Erzeugungsabschnitt, dem Bildtelefon-Verarbeitungsabschnitt und der Anzeigeeinheit bereitgestellt ist,
einen Steuerabschnitt (7) zum Steuern des ersten Schalters, um den Anzeigedaten-Erzeugungsabschnitt und die Anzeigeeinheit in dem allgemeinen Verwendungsmodus zu verbinden, so dass die ersten Anzeigedaten der Anzeigeeinheit zugeführt werden, und den Bildtelefon-Verarbeitungsabschnitt und die Anzeigeeinheit in dem Bildtelefon-Verwendungsmodus zu verbinden, so dass die zweiten Anzeigedaten der Anzeigeeinheit zugeführt werden,
einen ersten Speicher (30),
eine erste Eingabeschaltung (21), die mit dem Anzeigedaten-Erzeugungsabschnitt verbunden ist, wobei die erste Eingabeschaltung dafür eingerichtet ist, die ersten Anzeigedaten von dem Anzeigedaten-Erzeugungsabschnitt zu empfangen, einen ersten Konvertierungsprozess an den ersten Anzeigedaten auszuführen, um konvertierte Anzeigedaten zu erzeugen, und sie in dem ersten Speicher zu speichern,
eine Bewegtbild-CODEC-Schaltung (23) zum Empfangen komprimierter Bewegtbilddaten von einem Zählerende, zum Entwickeln der empfangenen komprimierten Bewegtbilddaten in entwickelte Bewegtbild-Anzeigedaten und zum Speichern in dem ersten Speicher und
eine Kombinationsschaltung (24) zum Auslesen der konvertierten Anzeigedaten und der entwickelten Bewegtbild-Anzeigedaten aus dem ersten Speicher, um zu den zweiten Anzeigedaten zu kombinieren oder zu synthetisieren, und zum Ausgeben der zweiten Anzeigedaten an den ersten Schalter.

2. Informations-Kommunikationsendgerät mit der Bildtelefonfunktion nach Anspruch 1, welches weiter aufweist:
eine Leistungsquelle (5) und
einen zweiten Schalter (8), der zwischen dem Bildtelefon-Verarbeitungsabschnitt und der Leistungsquelle bereitgestellt ist,
wobei der' Steuerabschnitt dafür eingerichtet ist, den zweiten Schalter zu steuern, um die Leistungsquelle in dem allgemeinen Verwendungsmodus von dem Bildtelefon-Verarbeitungsabschnitt zu trennen und die Leistungsquelle in dem Bildtelefon-Verwendungsmodus mit dem Bildtelefon-Verarbeitungsabschnitt zu verbinden.

3. Informations-Kommunikationsendgerät mit der Bildtelefonfunktion nach Anspruch 1 oder 2, wobei der Bildtelefon-Verarbeitungsabschnitt aufweist:
eine Kamera (10) und
eine zweite Eingabeschaltung (22), die mit der Kamera verbunden ist, wobei die zweite Eingabeschaltung dafür eingerichtet ist, Bewegtbild-Anzeigedaten von der Kamera zu empfangen, einen zweiten Konvertierungsprozess an den Bewegtbild-Anzeigedaten auszuführen, um konvertierte Bewegtbild-Anzeigedaten zu erzeugen, und sie in dem ersten Speicher zu speichern,
wobei die Kombinationsschaltung dafür eingerichtet ist, die konvertierten Bewegtbild-Anzeigedaten aus dem ersten Speicher auszulesen.

4. Informations-Kommunikationsendgerät mit der Bildtelefonfunktion nach einem der Ansprüche 1 bis 3, wobei die Bewegtbild-CODEC-Schaltung dafür eingerichtet ist, die konvertierten Bewegtbild-Anzeigedaten aus dem ersten Speicher auszulesen und die konvertierten Bewegtbild-Anzeigedaten zu Übertragungs-Bewegtbilddaten zu komprimieren, und
das Informations-Kommunikationsendgerät weiter aufweist:
eine Kommunikationsschaltung (50) zum Senden der Übertragungs-Bewegtbilddaten zu dem Zählerende.

5. Informations-Kommunikationsendgerät mit der Bildtelefonfunktion nach einem der Ansprüche 1 bis 4, wobei die Anzeigeeinheit eine dritte Eingabeschaltung aufweist, die die ersten Anzeigedaten als die eingegebenen Anzeigedaten empfängt,
und die erste Eingabeschaltung die gleiche Funktion wie die dritte Eingabeschaltung erreicht.

6. Informations-Kommunikationsendgerät mit der Bildtelefonfunktion nach einem der Ansprüche 1 bis 5, wobei der Bildtelefon-Verarbeitungsabschnitt weiter aufweist:
einen zweiten Speicher (40),
wobei die Bewegtbild-CODEC-Schaltung dafür eingerichtet ist, die entwickelten Bewegtbild-Anzeigedaten, ansprechend auf eine Anweisung vom Steuerabschnitt, in dem zweiten Speicher zu speichern, und
die zweite Eingabeschaltung dafür eingerichtet ist, die konvertierten Bewegtbild-Anzeigedaten, ansprechend auf eine Anweisung vom Steuerabschnitt, in dem zweiten Speicher zu speichern.

7. Verfahren zum Schalten zwischen einer Mobiltelefonfunktion und einer Bildtelefonfunktion, welches folgende Schritte aufweist:
(a) Erzeugen erster Anzeigedaten in einem Mobiltelefon-Funktionsmodus,
(b) Erzeugen zweiter Anzeigedaten durch die Verwendung einer Bildtelefonfunktion in einem Bildtelefon-Funktionsmodus,
(c) Verbinden der ersten Anzeigedaten mit einer Anzeigeeinheit in dem Mobiltelefon-Funktionsmodus, so dass die ersten Anzeigedaten auf der Anzeigeeinheit angezeigt werden, und
(d) Verbinden der zweiten Anzeigedaten mit der Anzeigeeinheit in dem Bildtelefon-Funktionsmodus, so dass die zweiten Anzeigedaten auf der Anzeigeeinheit angezeigt werden,
wobei Schritt (b) aufweist:
Ausführen eines ersten Konvertierungsprozesses an den ersten Anzeigedaten, um konvertierte Anzeigedaten zu erzeugen und sie in einem ersten Speicher zu speichern,
Entwickeln der von einem Zählerende empfangenen komprimierten Bewegtbilddaten zu entwickelten Bewegtbild-Anzeigedaten und Speichern im ersten Speicher und
Auslesen der konvertierten Anzeigedaten und der entwickelten Bewegtbild-Anzeigedaten aus dem ersten Speicher, um sie zu den zweiten Anzeigedaten zu kombinieren oder zu synthetisieren.

8. Verfahren zum Schalten nach Anspruch 7, welches weiter folgende Schritte aufweist:
(e) Zuführen elektrischer Leistung für die Bildtelefonfunktion in dem Bildtelefon-Funktionsmodus und
(f) Unterbrechen der Zufuhr der elektrischen Leistung in dem Mobiltelefon-Funktionsmodus.

9. Verfahren zum Schalten nach Anspruch 7 oder 8, wobei Schritt (b) aufweist:
Ausführen eines zweiten Konvertierungsprozesses an von einer Kamera aufgenommenen Bewegtbild-Anzeigedaten, um konvertierte Bewegtbild-Anzeigedaten zu erzeugen und sie in dem ersten Speicher zu speichern,
wobei die konvertierten Bewegtbild-Anzeigedaten aus dem ersten Speicher ausgelesen werden, um sie zu den zweiten Anzeigedaten zu kombinieren oder zu synthetisieren.

10. Verfahren zum Schalten nach einem der Ansprüche 7 bis 9, welches weiter folgende Schritte aufweist:
Auslesen der konvertierten Bewegtbild-Anzeigedaten aus dem ersten Speicher und Komprimieren der konvertierten Bewegtbild-Anzeigedaten zu Übertragungs-Bewegtbilddaten und
Senden der Übertragungs-Bewegtbilddaten zu dem Zählerende.

11. Verfahren zum Schalten nach einem der Ansprüche 7 bis 10, wobei das Entwickeln aufweist:
Speichern der entwickelten Bewegtbild-Anzeigedaten in einem zweiten Speicher, und
wobei das Ausführen eines zweiten Konvertierungsprozesses aufweist:
Speichern der konvertierten Bewegtbild-Anzeigedaten in dem zweiten Speicher.

## Revendications

1. Terminal de communication d'informations à fonction visiophone, comprenant :
une partie génération de données d'affichage (1) destinée à générer des premières données d'affichage dans un mode d'utilisation générale dans lequel une fonction visiophone n'est pas utilisée ;
une partie traitement par visiophone (2) destinée à générer des secondes données d'affichage dans un mode d'utilisation en visiophone dans lequel la fonction de visiophone est utilisée ;
une unité d'affichage (3) destinée à afficher les données d'affichage entrées ;
un premier commutateur (4) prévu entre ladite partie génération'de données d'affichage, ladite partie traitement par visiophone et ladite unité d'affichage ;
une partie commande (7) destinée à commander ledit premier commutateur pour connecter ladite partie génération de données d'affichage et ladite unité d'affichage dans ledit mode d'utilisation générale afin que lesdites premières données d'affichage soient fournies à ladite unité d'affichage et pour connecter ladite partie traitement par visiophone et ladite unité d'affichage dans ledit mode d'utilisation en visiophone afin que lesdites secondes données d'affichage soient fournies à ladite unité d'affichage ;
une première mémoire (30);
un premier circuit d'entrée (21) connecté à ladite partie génération de données d'affichage, ledit premier circuit d'entrée étant apte à recevoir lesdites premières données d'affichage de ladite partie génération de données d'affichage, à exécuter un premier procédé de conversion sur lesdites premières données d'affichage pour générer des données d'affichage converties et à les stocker dans ladite première mémoire ;
un circuit CODEC de film (23) destiné à recevoir des données de film compressées d'une extrémité contraire, à décompresser lesdites données de film compressées pour obtenir des données d'affichage de film décompressées et à les stocker dans ladite première mémoire ; et
un circuit de combinaison (24) destiné à lire lesdites données d'affichage converties et lesdites données d'affichage de film décompressées à partir de ladite première mémoire pour les combiner ou les synthétiser en lesdites secondes données d'affichage, et à transmettre lesdites secondes données d'affichage audit premier commutateur.

2. Terminal de communication d'informations à fonction visiophone selon la revendication 1, comprenant en outre :
une source d'alimentation (5) et
un second commutateur (8) prévu entre ladite partie traitement par visiophone et ladite source d'alimentation,
dans lequel ladite partie commande est apte à commander ledit second commutateur pour déconnecter ladite source d'alimentation de ladite partie traitement par visiophone dans ledit mode d'utilisation générale et pour connecter ladite source d'alimentation à ladite partie traitement par visiophone dans ledit mode d'utilisation en visiophone.

3. Terminal de communication d'informations à fonction visiophone selon la revendication 1 ou 2, ladite partie traitement par visiophone comprenant :
une caméra (10) ; et
un deuxième circuit d'entrée (22) connecté à ladite caméra, ledit deuxième circuit d'entrée étant apte à recevoir des données d'affichage de film de ladite caméra, à exécuter un second procédé de conversion sur lesdites données d'affichage de film pour générer des données d'affichage de film converties et à les stocker dans ladite première mémoire ;
dans lequel le circuit de combinaison est apte à lire lesdites données d'affichage de film converties à partir de ladite première mémoire.

4. Terminal de communication d'informations à fonction visiophone selon l'une quelconque des revendications 1 à 3, dans lequel ledit circuit CODEC de film est apte à lire lesdites données d'affichage de film converties à partir de ladite première mémoire et à compresser lesdites données d'affichage de film converties en des données de film de transmission, et
ledit terminal de communication d'informations comprenant en outre :
un circuit de communications (50) destiné à transmettre lesdites données de film de transmission à ladite extrémité contraire.

5. Terminal de communication d'informations à fonction visiophone selon l'une quelconque des revendications 1 à 4, dans lequel ladite unité d'affichage a un troisième circuit d'entrée qui reçoit lesdites premières données d'affichage sous forme desdites données d'affichage entrées,
ledit premier circuit d'entrée ayant une fonction identique à celle du troisième circuit d'entrée.

6. Terminal de communication d'informations à fonction visiophone selon l'une quelconque des revendications 1 à 5, ladite partie traitement par visiophone comprenant en outre :
une seconde mémoire (40),
dans lequel ledit circuit CODEC de film est apte à stocker lesdites données d'affichage de film décompressées dans ladite seconde mémoire en réponse à une consigne de ladite partie commande, et
ledit deuxième circuit d'entrée est apte à stocker lesdites données d'affichage de film converties dans ladite seconde mémoire en réponse à une consigne de ladite partie commande.

7. Procédé de commutation entre une fonction téléphone mobile et une fonction visiophone, comprenant les étapes consistant à :
(a) générer des premières données d'affichage dans un mode de fonction téléphone mobile ;
(b) générer des secondes données d'affichage en utilisant une fonction visiophone dans un mode de fonction visiophone ;
(c) connecter lesdites premières données d'affichage à une unité d'affichage dans ledit mode de fonction téléphone mobile afin que lesdites premières données d'affichage s'affichent sur ladite unité d'affichage ; et
(d) connecter lesdites secondes données d'affichage à ladite unité d'affichage dans ledit mode de fonction téléphone mobile afin que lesdites secondes données d'affichage s'affichent sur ladite unité d'affichage,
dans lequel ladite étape (b) comprend les étapes consistant à :
exécuter un premier procédé de conversion sur lesdites premières données d'affichage pour générer des données d'affichage converties, et les stocker dans une première mémoire ;
décompresser les données de film compressées reçues d'une extrémité contraire en données d'affichage de film décompressées, et les stocker dans ladite première mémoire ; et
lire lesdites données d'affichage converties et lesdites données d'affichage de film décompressées à partir de ladite mémoire pour les combiner ou les synthétiser en lesdites secondes données d'affichage.

8. Procédé de commutation selon la revendication 7, comprenant en outre les étapes consistant à :
(e) alimenter électriquement ladite fonction visiophone dans ledit mode de fonction visiophone ; et
(f) arrêter l'alimentation électrique dans ledit mode de fonction téléphone mobile.

9. Procédé de commutation selon la revendication 7 ou 8, dans lequel ladite étape (b) comprend les étapes consistant à :
exécuter un second procédé de conversion sur des données d'affichage de film prises par une caméra pour générer des données d'affichage de film converties et les stocker dans ladite première mémoire,
dans lequel lesdites données d'affichage de film sont lues à partir de ladite première mémoire pour être combinées ou synthétisées en lesdites secondes données d'affichage.

10. Procédé de commutation selon l'une quelconque des revendications 7 à 9, consistant en outre à :
lire lesdites données d'affichage de film converties à partir de ladite première mémoire et compresser lesdites données d'affichage de film converties pour obtenir des données de film de transmission ; et à
transmettre lesdites données de film de transmission à ladite extrémité contraire.

11. Procédé de commutation selon l'une quelconque des revendications 7 à 10, dans lequel ladite décompression consiste à :
stocker lesdites données d'affichage de film décompressées dans une seconde mémoire, et
ladite exécution d'un second procédé de conversion consistant à :
stocker lesdites données d'affichage de film converties dans ladite seconde mémoire.
